# EUROPÄISCHE PATENTSCHRIFT

(11) **EP 0 970 024 B1**
(45) Veröffentlichungstag und Bekanntmachung des Hinweises auf die Patenterteilung: **04.08.2004**
(21) Anmeldenummer: 98928055.7
(22) Anmeldetag: 23.03.1998
(51) Int. Cl.: C03C 15/00, H01L 21/00, G02B 6/12, G02B 6/42

(54) **VERFAHREN ZUM HERSTELLEN EINES GLASKÖRPERS MIT MINDESTENS EINER AUSNEHMUNG**
METHOD FOR PRODUCING A GLASS OBJECT HAVING AT LEAST ONE RECESS
PROCEDE DE FABRICATION D'UN OBJET EN VERRE COMPRENANT AU MOINS UN EVIDEMENT

(30) Priorität: 26.03.1997 DE 19712779
(43) Veröffentlichungstag der Anmeldung: 12.01.2000
(73) Patentinhaber: Infineon Technologies AG, 81669 München (DE)
(72) Erfinder: WEIGERT, Martin, D-93152 Hardt (DE)
(74) Vertreter: Maikowski, Michael, Dipl.-Ing. Dr.
(86) Internationale Anmeldenummer: PCT/DE1998/000849
(87) Internationale Veröffentlichungsnummer: WO 1998/042628

(56) Entgegenhaltungen:
- DD-A- 254 811
- DE-A- 4 321 582
- US-A- 5 174 857
- SPIERINGS G A C M: "REVIEW WET CHEMICAL ETCHING OF SILICATE GLASSES IN HYDROFLUORIC ACID BASED SOLUTIONS" JOURNAL OF MATERIALS SCIENCE LETTERS, Bd. 12, Nr. 23, 1.Dezember 1993, Seiten 6261-6273, XP000414624
- DATABASE INSPEC INSTITUTE OF ELECTRICAL ENGINEERS, STEVENAGE, GB Inspec No. 3737969, KAL S ET AL: "Slope etching of silicon dioxide" XP002072514 & MICROELECTRONICS AND RELIABILITY, 1990, UK, Bd. 30, Nr. 4, ISSN 0026-2714, Seiten 719-722,

## Beschreibung

Die Erfindung bezieht sich auf ein Verfahren zum Herstellen eines Glaskörpers mit mindestens einer Ausnehmung, die mindestens eine bereichsweise ebene, zu einer Hauptfläche des Glaskorpers schräg stehende Seitenwand aufweist.

Sie bezieht sich insbesondere auf ein Verfahren zum Herstellen eines Glaskorpers mit mindestens einem im Querschnitt im Wesentlichen trapezförmigen Graben oder Schlitz oder mit einer/einem im Wesentlichen pyramidenstumpfförmigen Grube/Durchgangsloch. Ferner bezieht sie sich auf ein optoelektronisches Modul mit einem derart hergestellten Glaskörper.

Bislang werden im Querschnitt trapezförmige Gräben in Glaskörpern mittels Sägen hergestellt. Die Rauhigkeit und die Oberflächenbeschädigung ist stark vom verwendeten Sägeblatt abhängig. Pyramidenstumpfförmige Gruben oder Durchbrüche können mit einem Sägeverfahren nicht und mittels Bohren und Schleifen nur mit großem Aufwand hergestellt werden.

Der vorliegenden Erfindung liegt die Aufgabe zugrunde, ein technisch einfacheres Verfahren der eingangs genannten Art zu entwickeln. Mit dem Verfahren sollen insbesondere in einem Glaskörper auf einfache Weise im Querschnitt im Wesentlichen trapezförmige Gräben oder Schlitze oder im Wesentlichen pyramidenstumpfförmige Gruben oder Durchgangslöcher herstellbar sein.

Diese Aufgabe wird durch ein Verfahren mit den Merkmalen des Anspruches 1 gelöst. Vorteilhafte Weiterbildungen und bevorzugte Verwendungen des Verfahrens sind Gegenstand der Unteransprüche 2 bis 11.

Der vorliegenden Erfindung liegt die Aufgabe zugrunde, ein technisch einfacheres Verfahren der eingangs genannten Art zu entwickeln. Mit dem Verfahren soll die gleichzeitige Herstellung einer Vielzahl von Glasprismen auf eine möglichst wirtschaftliche Weise möglich sein.

Diese Aufgabe wird durch ein Verfahren mit den Merkmalen des Anspruches 1 gelöst. Vorteilhafte Weiterbildungen des Verfahrens sind Gegenstand der Unteransprüche 2 bis 8.

Erfindungsgemäß ist ein Verfahren zum gleichzeitigen Herstellen einer Vielzahl von Glasprismen aus einem Glaskörper vorgesehen.
Bei dem Verfahren werden folgende Verfahrensschritte durchgeführt:
- Herstellen eines Borsilikatglas aufweisenden Glaskörpers,
- Herstellen einer Ätzmaske mit mindestens einem Ätzfenster auf der Hauptfläche (auch Hauptoberfläche) des Glaskörpers und
- naßchemisches anisotropes Ätzen des Glaskörpers durch das Ätzfenster hindurch, insbesondere mittels eines Ätzgemisches, das Flußsäure, Salpetersäure und/oder Ammoniumfluorid aufweist, wobei
- mindestens eine Ausnehmung die mindestens eine zu einer Hauptfläche des Glaskörpers schräg stehende, ebene Seitenwand erzeugt wird und
- durch Variation der Ätzparameter und/oder der Zusammensetzung des Ätzgemisches der von der Hauptfläche und dem ebenen Bereich der Seitenwand eingeschlossene Winkel einstellbar ist.

Mindestens eine Ausnehmung weist die Form einer pyramidenstumpfartigen Grube, eines pyramidenstumpfartigen Durchgangslochs oder eines Grabens mit einem im wesentlichen trapezförmigen Querschnitt auf, wobei die Flächen der Ausnehmung Seitenflächen der herzustellenden Glasprismen bilden.

Zunächst wird ein Glaskörper, der im Wesentlichen aus Borsilikatglas besteht, hergestellt. Nachfolgend wird auf eine Hauptoberfläche des Glaskörpers eine Ätzmaske aufgebracht, die mit mindestens einem Ätzfenster versehen ist. Mittels anisotropem Ätzen durch das Ätzfenster hindurch wird dann in dem Glaskörper eine Ausnehmung mit der mindestens einen zumindest bereichsweise ebenen Seitenwand ausgebildet, die schräg zu der Hauptoberfläche steht, wobei die Ätzmaske unterätzt wird.

Durch Variation der Ätzparameter und der Zusammensetzung des Ätzgemisches kann der von der Hauptoberfläche und dem ebenen Bereich der Seitenwandung, z. B. eine Seitenwand eines trapezartigen Grabens oder Schlitzes oder einer pyramidenstumpfartigen Grube, eingeschlossene Winkel eingestellt werden.

Zum Ätzen wird bevorzugt ein Ätzgemisch verwendet, das im Wesentlichen Flusssäure, Salpetersäure und/oder Ammoniumfluorid aufweist. Damit können vorteilhafterweise Ätztiefen von mehr als 100 µm erzeugt werden.

Bevorzugt werden zum Beispiel folgende Ätzbedingungen gewählt:

| | |
|---|---|
| Ätzgemisch | 10 - 50%ige Flusssäure |
| Ätztemperatur | 10 - 60°C |
| Ätzdauer | 1 - 180 Minuten (bei großen Ätztiefen Von mehr als 100 µm auch länger) |

Die Ätzmaske wird bevorzugt durch Aufbringen einer Metallschicht auf die Hauptoberfläche des Glaskörpers und nachfolgendem fototechnischem Strukturieren der Metallschicht hergestellt. Dies sind aus der Halbleitertechnik bekannte Verfahrensschritte zum Herstellen von Ätzmasken und werden von daher an dieser Stelle nicht mehr näher erläutert.

Bevorzugt wird das erfindungsgemäße Verfahren zum Herstellen von Glasprismen und/oder integrierten Optiken für optische Vorrichtungen verwendet, insbesondere für Vorrichtungen der optischen Nachrichtenübertragung, wie beispielsweise optoelektronische Module.

Das erfindungsgemäße Verfahren wird im folgenden anhand eines Ausführungsbeispieles in Verbindung mit den Figuren 1a bis 5 näher erläutert. Es zeigen:
Figuren 1a bis 1d eine schematische Darstellung eines ersten Verfahrensablaufs zum Herstellen einer Vielzahl von im Querschnitt im Wesentlichen trapezförmigen Ausnehmung in einem Glaskörper,
Figuren 2a und 2b eine schematische Darstellung eines ersten Verfahrensablaufs zum Herstellen einer Vielzahl von im Querschnitt im Wesentlichen trapezförmigen Glasprismen oder einer Glasscheibe mit einer Vielzahl von im Wesentlichen pyramidenstumpfförmigen Durchgangslöchern oder Gruben,
Figur 2c eine schematische Darstellung einer Draufsicht auf einen Träger mit einer Vielzahl von nach einem Verfahren gemäß den Figuren 2a und 2b hergestellten Glasprismen,
Figur 2d eine schematische Darstellung einer Draufsicht auf einen Träger mit einer nach einem Verfahren gemäß den Figuren 2a und 2b hergestellten Glasscheibe mit einer Vielzahl von im Wesentlichen pyramidenstumpfförmigen Durchgangslöchern,
Figuren 3a bis 3d eine schematische Darstellung eines zweiten Verfahrensablaufs zum Herstellen einer Vielzahl von im Querschnitt im Wesentlichen trapezförmigen Glasprismen oder einer Glasscheibe mit einer Vielzahl von im Wesentlichen pyramidenstumpfförmigen Durchgangslöchern,
Figur 4 eine schematische Darstellung eines optoelektronischen Moduls mit nach dem erfindungsgemäßen Verfahren herstellten Glasprismen und
Figur 5 eine schematische Darstellung eines optoelektronischen Moduls mit einem Glaskörper, der eine nach dem erfindungsgemäßen Verfahren hergestellte Ausnehmung aufweist.

In den Figuren sind gleiche oder gleichwirkende Teile sowie gleichwirkende Verfahrensschritte jeweils mit denselben Bezugszeichen versehen.

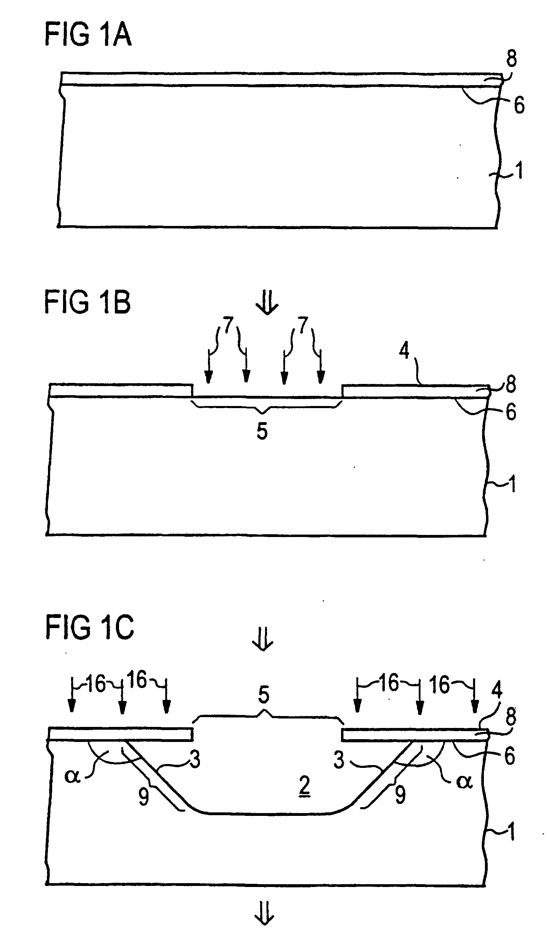

Bei dem in den Figuren 1a bis 1d schematisch dargestellten Verfahrensablauf wird auf eine Hauptoberfläche 6 eines Glaskörpers 1, der im Wesentlichen Borsilikatglas aufweist, eine Metallschicht 8 aufgebracht (Figur 1a). Die Metallschicht 8, die beispielsweise aus CrPtAuTi besteht, wird nachfolgend mittels Fototechnik strukturiert und mit einem Ätzfenster 5 versehen. Derartige fototechnische Strukturierungsverfahren sind aus der Halbleitertechnik bekannt und werden von daher an dieser Stelle nicht näher erlautert.

Der Glaskörper 1 wird nachfolgend durch das Ätzfenster 5 hindurch beispielsweise mittels einer Ätzlösung, die Flusssaure (HF), Salpetersaure (HNO₃) und/oder Ammoniumflorid (NH₄F) aufweist, anisotrop geätzt (mit 40%iger HF etwa bei Raumtemperatur ca. 1 bis 180 Minuten; bei großen Ätztiefen von mehr als 100 µm ggf. auch länger). Dabei entsteht im Glaskörper 1 eine im Querschnitt im Wesentlichen trapezförmige Ausnehmung 2, deren Seitenwände 3 ebene Flächenbereiche 9 aufweisen. Die ebenen Flächen 9 schließen mit der Hauptoberfläche 6 des Glaskörpers 1 einen Winkel α ein, der zwischen 90° und 180° liegt. Der anisotrope Ätzschritt ist in Figur 1b durch die Pfeile 7 angedeutet.

Falls die von der strukturierten Metallschicht 8 gebildete Atzmaske 4 für nachfolgende Fertigungsschritte, die z. B. in Zusammenhang mit der Herstellung von entsprechenden Vorrichtungen stehen, in denen sie beispielsweise als Lötbasis dienen kann, nicht mehr benötigt wird, kann sie beispielsweise mittels nasschemischem Atzen und/oder Trockenätzen wie Ionenstrahlätzen, Rücksputtern usw. wieder abgelöst werden (Figur 1c). Ebenso kann ein mechanisches Verfahren wie Sandstrahlen, Schleifen oder Polieren zum Ablösen der Atzmaske verwendet werden. Das Ablösen der Ätzmaske 4 ist in Figur 1c durch die Pfeile 16 angedeutet.

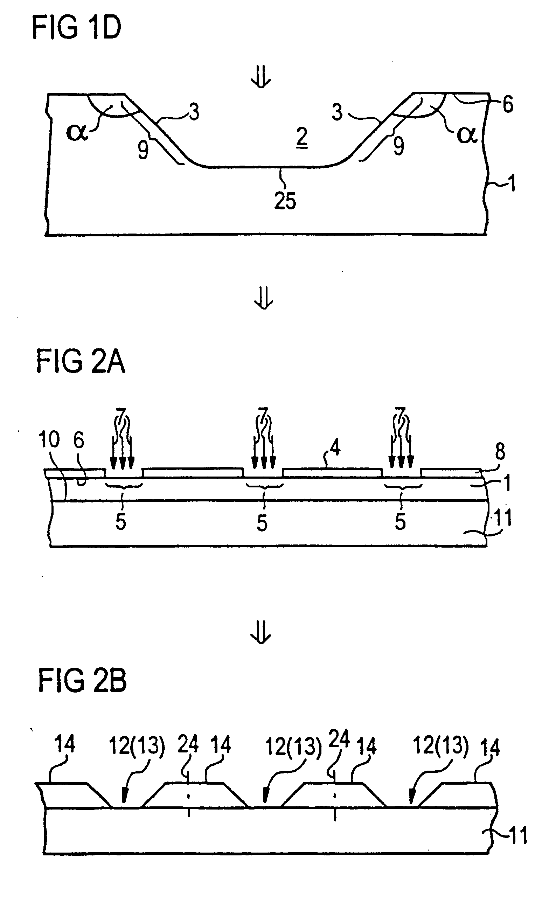

Nach Abschluss der oben genannten Verfahrensschritte liegt nun ein Glaskörper 1 mit einer Ausnehmung 2 vor, die eine im Wesentlichen ebene Bodenfläche 25 und im Wesentlichen ebene, schräg zur Hauptoberfläche 6 stehende Seitenwände 3 aufweist (Figur 1d). Die Ausnehmung 2 hat abhängig von der Form des Atzfenster 5, entweder langgestreckt oder annähernd quadratisch, die Form eines im Querschnitt im Wesentlichen trapezförmigen Grabens bzw. einer pramidenstumpfförmigen Grube.

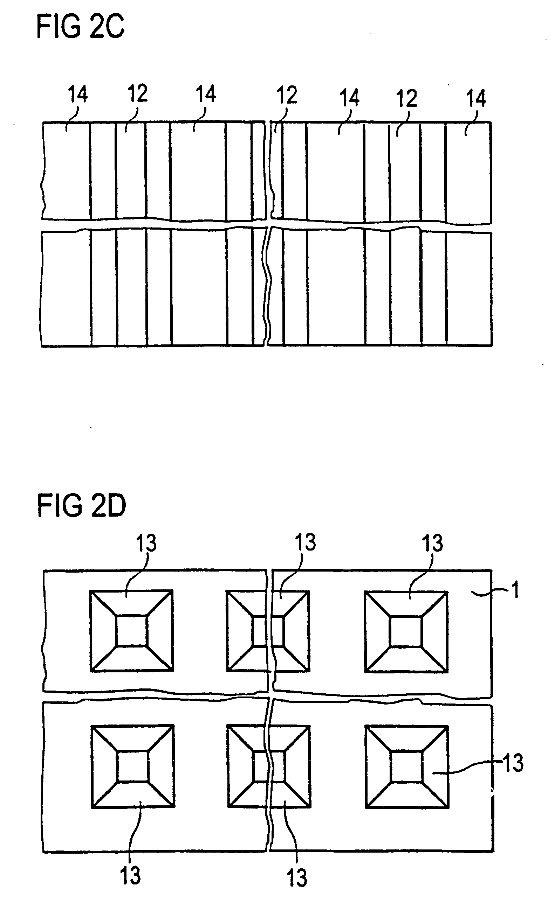

Nach dem oben beschriebenen prinzipiellen Verfahren können, wie in den Figuren 2a bis 3d gezeigt und im Folgenden näher erläutert, in einer Glasscheibe 1 eine Vielzahl von Ausnehmungen 2 mit ebenen schrägen Seitenwänden 3, z. B. in Form von im Querschnitt im Wesentlichen trapezförmigen Gräben 17 oder Schlitzen 12 oder im Wesentlichen pyramidenstumpfförmigen Gruben 18 oder Durchgangslöchern 13 ausgebildet werden.

Zur Herstellung einer Vielzahl von im Wesentlichen trapezförmigen Glasprismen 14 oder zum Herstellen eines Glaskörpers 1 mit einer Vielzahl von im Wesentlichen pyramidenstumpfförmigen Durchgangslöchern 13 oder Gruben 18 wird der Glaskörper 1, wie in Figur 2a gezeigt, mit einer der Hauptoberfläche 6 gegenüberliegenden weiteren Hauptoberfläche 10 auf einem Träger 11, der beispielsweise aus Silizium oder einem metallischen Werkstoff besteht, befestigt. Der Glaskörper 1 wird bereits vor oder erst nach dem Befestigen auf dem Träger 11 auf seiner Hauptoberfläche 6 mit einer Ätzmaske 4 versehen, die eine Vielzahl von Ätzfenstern 5 aufweist, deren Form von der Form der gewunschten Ausnehmungen 12,13,17,18 abhängt. Zur Herstellung von Glasprismen 14 wird die Ätzmaske 4 beispielsweise mit einer Vielzahl von einen Abstand voneinander aufweisenden Spalten oder Schlitzen und zur Herstellung von Durchgangslöcher 13 oder Gruben 18 mit einer Vielzahl von beispielsweise rechteckigen oder quadratischen oder auch anders geformten Öffnungen als Ätzfenstern 5 versehen. Nachfolgend wird der Glaskörper 1 durch nasschemisches Ätzen 7 im Wesentlichen im Bereich der Ätzfenster 5 vollständig durchgeätzt, so daß im Glaskörper 1 je nach Ausbildung der Ätzmaske 4 langgestreckte im Querschnitt im Wesentlichen traprezförmige Schlitze 12 (Figuren 2b und 2c) oder im Wesentlichen pyramidenstumpfförmige Durchgangslöcher 13 (Figur 2d) erzeugt werden. Der Träger 11 besteht aus einem Material, das von dem Atzgemisch zum Atzen des Glaskörpers 1 nicht angegriffen wird, und dient somit als Atzstoppschicht.

Auf diese Weise kann eine Vielzahl von im Querschnitt traprezformigen Glasprismen 14 oder eine Glasscheibe 1 mit einer Vielzahl von pyramidenstumpfförmigen Durchgangslöchern 13 hergestellt werden. Die Glasprismen 14 bzw. die Glasscheibe 1 können/kann nach dem Ätzen und ggf. weiteren Verfahrensschritten, wie beispeilsweise Beschichtung mit Antireflexoder Spiegelschichten, von dem Träger 11 abglöst und weiterverarbeitet werden. Ebenso können die Prismen 14 auch im Scheibenverbund zusammen mit dem Träger 11 weiterverarbeitet werden.

Falls in der Glasscheibe 1 an Stelle von Schlitzen oder Durchgangslochern langgestreckte Graben bzw. pyramidenstumpfartige Gruben hergestellt werden sollen, wird die Glasscheibe beim Ätzschritt nicht vollständig durchgeätzt.

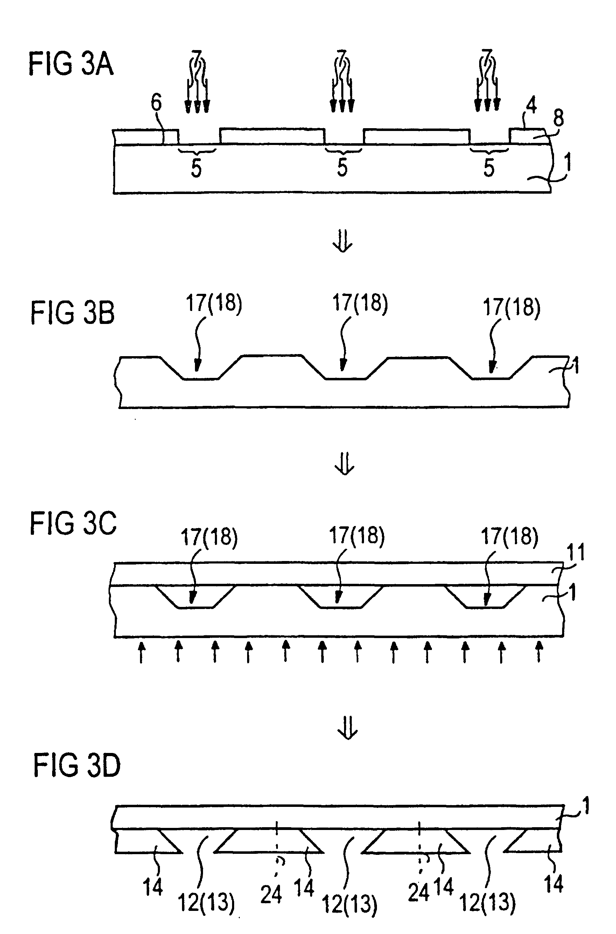

Bei dem in den Figuren 3a bis 3d schematisch dargestellten zweiten Verfahren zum Herstellen einer Vielzahl von trapezartigen Glasprismen 14 oder zum Herstellen eines Glaskörpers 1 mit einer Vielzahl von im Wesentlichen pyramidenstumpfförmigen Durchgangslöchern 13 wird der Glaskörper 1 zunächst mit einer Ätzmaske 4 mit einer Vielzahl von Ätzfenstern 5 versehen und durch diese Atzfenster 5 hindurch anisotrop geätzt aber nicht vollständig durchgeätzt (Figuren 3a und 3b). Der Glaskörper 1 kann hierbei, um beispielsweise die Bruchgefahr zu mindern, auf einem Träger befestigt sein.

Nachfolgend wird die Ätzmaske 4 vom Glaskörper 1 entfernt. Der Glaskörper 1 wird dann mit der mit trapezartigen Gräben 17 bzw. im Wesentlichen pyramidenstumpfförmigen Gruben 18 versehenen Seite, also mit seiner Hauptfläche 6, auf einen Träger 11 aufgebracht, der beispielsweise wiederum aus Silizium besteht (Figur 3c). Nachfolgend wird der Glaskörper 1 von der der Hauptoberfläche 6 gegenüberliegenden Seite her abgeschliffen oder poliert (angedeutet durch die Pfeile 26), solange, bis auf dem Träger 11 einzelne trapezartigen Glasprismen 14 bzw. ein Glaskörper 1 mit einer Vielzahl von pyramidenstumpfartigen Durchgangslöchern 13 vorhanden sind (Figur 3d).

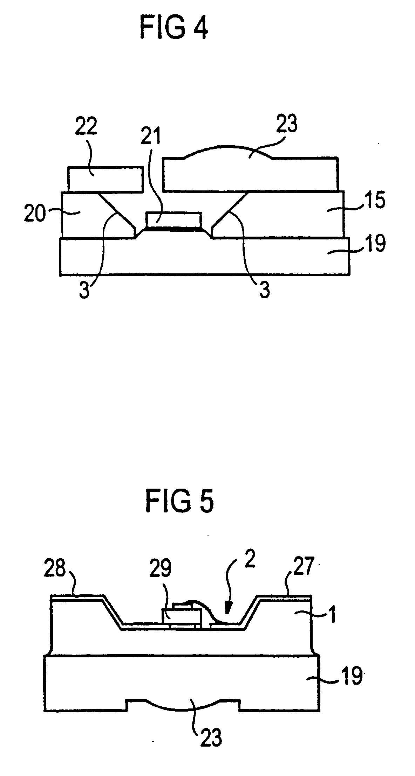

Derart hergestellte Glasprismen 14 können dann beispielsweise zur Herstellung eines optoelektronischen Moduls gemäß Figur 4 verwendet werden. Bei dem optoelektronischen Modul nach Figur 4 ist auf einem Subtrager 19 ein erstes Glasprimsa 15 und in einem Abstand dazu, ein zweites Glasprisma 20 befestigt, derart, dass die schrägen Seitenwände 3 einander zugewandt sind. Die Glasprismen 15,20 sind beispielsweise mittels Durchsagen der Glasprismen 14 entlang der in Figur 3d eingezeichneten Trennlinie 24 und nachfolgendem Ablösen vom Träger 11 hergestellt.

Zwischen den beiden Glasprismen 15,20 ist beispielsweise ein Laserchip 21 angeordnet, dessen ausgesandte Laserstrahlung von einer schrägen Seitenwand 3 des ersten Glasprismas 15 um 90° abgelenkt und durch eine auf dem Glasprisma 4 angeordnete Sammellinse 23 beispielsweise in einen Lichtwellenleiter eingekoppelt wird. Auf dem zweiten Glasprisma 20 ist beispielsweise eine Monitordiode 22 befestigt, die eine von der Rückseite des Laserchips 21 und an einer schrägen Seitenwand 3 des zweiten Glasprismas 20 reflektierte Laserstrahlung empfängt. Zur Verbesserung der Reflexionseigenschaften der Seitenwände 3 sind diese z. B. mit einer reflexionssteigernden Schicht, beispielsweise mit einer dielelektrischen Spiegelschicht, versehen. Derartige Spiegelschichten sind bekannt und werden daher an dieser Stelle nicht mehr näher erläutert.

Eine Vielzahl von optoelektronischen Modulen gemäß Figur 4 kann vermittels dem erfingungsgemäßen Verfahren auf einfache Weise im Scheibenverbund, also mittels Waferprozessen hergestellt werden. Dazu wird eine Vielzahl von Laserchips 21 auf einer Subtragerscheibe entsprechend einem vorgegebenen Raster befestigt. In einer Glasscheibe 1 wird entsprechend dem vorgegebenen Raster nach einem der oben beschriebenen erfindungsgemäßen Verfahren eine Vielzahl von im Querschnitt im Wesentlichen trapezförmigen Schlitzen 12 hergestellt. Diese wird dann auf die Subträgerscheibe derart aufgesetzt und mit dieser verbunden, daß die Laserdiodenchips 21 in den jeweils zugeordneten Schlitzen zu liegen kommen. Nachfolgend werden die Sammellinsen 23 und die Monitordioden 22 auf die Glasscheibe 1 aufgesetzt, bevor dann der Scheibenverbung aus Subträgerscheibe und Glasscheibe 1 in einzelne Lasermodule mit Subträger 19, Laserdiodenchip 21, erstem und zweiten Glasprisma 15,20, Sammellinse 23 und Montordiode 22 beispielsweise mittels Sägen vereinzelt werden.

Bei dem in Figur 5 dargestellten optoelektronischen Modul ist auf einem Subträger 19, der beispielsweise aus Glas oder, geeignete Strahlungswellenlänge vorausgesetzt, aus Silizium oder aus einem anderen Halbleitermaterial bestehen kann, ein Glaskörper 1 mit einer nach dem erfindungsgemäßen Verfahren hergestellten, im Querschnitt im Wesentlichen trapezförmigen Ausnehmung 2 befestigt. Die Ausnehmung 2 befindet sich auf der vom Subträger 19 abgewandten Seite des Glaskörpers 1 und ist mit elektrischen Anschlußbahnen 27,28, z. B. Metallisierungsbahnen, versehen, die aus der Ausnehmung 2 auf die Hauptoberfläche 6 des Glaskörpers 1 herausgeführt sind. In der Ausnehmung ist ein strahlungsemittierender und/oder - empfangender Halbleiterchip 29, beispielsweise ein Leuchtdiodenchip oder ein Laserdiodenchip, befestigt und mit den Anschlußbahnen 27,28 elektrisch leitend verbunden. Der Halbleiterchip 29 ist derart auf dem Glaskörper befestigt, daß dessen Strahlungsaustritt- und/oder -eintrittsfläche dem Subträger 19 zugewandt ist und die ausgesandte und/oder empfangene Strahlung den Subträger 19 durchdringt. Der Subträger 19 weist zur Fokussierung der ausgesandten und/oder empfangenen Strahlung auf der vom Glaskörper 1 abgewandten Seite eine Sammellinse 23 auf. Diese kann im Subtrager 19 beispielsweise mittels Atzen ausgebildet sein oder separat hergestellt und auf dem Subträger 19 aufgebracht ein.

Auch dieses optoelektronische Modul kann in großer Stückzahl mittels Waferprozessen hergestellt werden, indem zunächst in einer Glasscheibe gemaß einem vorgegebenem Raster eine Vielzahl von im Querschnitt im Wesentlichen trapezförmigen Graben hergestellt werden. Diese Gräben werden nachfolgend, entweder vor oder nach dem Verbinden mit einer Subträgerscheibe mit einer Vielzahl von Anschlußbahnen 27,28 und einer entsprechenden Anzahl von Halbleiterchips 29 versehen. Auf der von der Glasscheibe abgewandten Hauptfläche der Subträgerscheibe werden vor oder nach dem Verbinden mit der Glasscheibe entsprechend der Position der Halbleiterchips Sammellinsen hergestellt. Nach Fertigstellung dieses Waferverbunds aus Glasscheibe und Subträgerscheibe wird dieser beispielsweise mittels Sägen in einzelne optoelektronische Module gemäß Figur 5 vereinzelt.

## Patentansprüche

1. Verfahren zum gleichzeitigen Herstellen einer Vielzahl von Glasprismen aus einem Glaskörper (1) mit den Verfahrensschritten:
- Herstellen eines Borsilikatglas aufweisenden Glaskörpers (1),
- Herstellen einer Ätzmaske (4) mit mindestens einem Ätzfenster (5) auf der Hauptfläche (6) des Glaskörpers (1) und
- naßchemisches anisotropes Ätzen (7) des Glaskörpers (1) durch das Ätzfenster (5) hindurch, insbesondere mittels eines Ätzgemisches, das Flußsäure, Salpetersäure und/oder Ammoniumfluorid aufweist, wobei
- mindestens eine Ausnehmung (2), die mindestens eine zu einer Hauptfläche (6) des Glaskörpers (1) schräg stehende, ebene Seitenwand (3) erzeugt wird und
- durch Variation der Ätzparameter und/oder der Zusammensetzung des Ätzgemisches der von der Hauptfläche (6) und dem ebenen Bereich (9) der Seitenwand (3) eingeschlossene Winkel einstellbar ist,
**dadurch gekennzeichnet, dass**
das mindestens eine Ausnehmung (2) die Form einer pyramidenstumpfartigen Grube (2, 18), eines pyramidenstumpfartigen Durchgangslochs (13) oder eines Grabens (2, 17) mit einem im wesentlichen trapezförmigen Querschnitt aufweist, wobei die Flächen der Ausnehmung (2) Seitenflächen der herzustellenden Glasprismen bilden.

2. Verfahrens nach Anspruch 1,
**dadurch gekennzeichnet,**
**dass** der Glaskörper (1) mit einer der Hauptfläche (6) gegenüberliegenden weiteren Hauptsache (10) auf einem Träger (11) befestigt wird, der durch das Ätzen (7) im Wesentlichen nicht angegriffen wird, dass der Glaskörper (1) vor oder nach dem Befestigen auf dem Träger (11) mit einer Ätzmaske (4), die eine Vielzahl von Ätzfenstern (5) aufweist, versehen wird und
**dass** der Glaskörper (1) durch das nasschemische Ätzen (7) im Wesentlichen im Bereich der Ätzfenster (5) angeätzt bzw. vollständig durchgeätzt wird.

3. Verfahrens nach Anspruch 1,
**dadurch gekennzeichnet, dass** auf einer Hauptfläche des Glaskörpers (1) eine Ätzmaske mit einer Vielzahl von Ätzfenstern (5) hergestellt wird, dass in den Glaskörper (1) durch das nasschemische Ätzen (7) eine Vielzahl von im Querschnitt im Wesentlichen trapezförmigen Gräben (17) oder im Wesentlichen pyramidenstumpfförmigen Gruben (18) eingeätzt werden, dass der Glaskörper (1) mit der mit den Gräben (17) bzw. Gruben (18) versehenen Seite auf einen Träger (11) aufgebracht wird, dass der Glaskörper (1) von der der Hauptfläche (6) gegenüberliegenden Seite her abgeschliffen wird, solange, bis auf dem Träger bereits voneinander getrennte Glasprismen (14) bzw. ein Glaskörper (1) mit einer Vielzahl von im Wesentlichen pyramidenstumpfförmigen Durchgangslöchern (13) vorhanden sind.

4. Verfahren nach einem der Ansprüche 1 bis 3 zum Herstellen von integrierten Optiken oder Strahlumlenkmitteln für optische Vorrichtungen, insbesondere für Vorrichtungen der optischen Nachrichtenübertragung.

5. Verfahren nach einem der Ansprüche 1 bis 4 zum Herstellen eines optoelektronischen Moduls, bei dem zum Umlenken einer ausgesandten und/oder empfangenen Strahlung eines strahlungaussendenden und/oder strahlungempfangenden Körpers ein Glasprisma vorgesehen ist,
**dadurch gekennzeichnet,**
**dass** eine ebene Seitenfläche des Glasprismas mittels anisotropem Ätzen eines Glaskörpers hergestellt wird.

6. Verfahren nach einem er Ansprüche 1 bis 5 zum Herstellen eines optoelektronischen Moduls, bei dem ein strahlungsemittierender und/oder -empfangender Körper (29) in einem Graben (17) oder in einer Grube (18) eines Glaskörpers (1) angeordnet ist,
**dadurch gekennzeichnet,**
**dass** der Graben (17) oder die Grube (18) mittels anisotropem Ätzen des Glaskörpers (1) hergestellt ist.

7. Verfahren gemäß Anspruch 6,
**gekennzeichnet durch** die Verfahrensschritte:
a) Befestigen einer Vielzahl von strahlungaussendenden und/oder strahlungempfangenden Körpern (21) auf einer Subträgerscheibe entsprechend einem vorgegebenem Muster,
b) Herstellen einer Vielzahl von im Querschnitt im Wesentlichen trapezförmigen Glasprismen (14), die mittels Glasstegen oder mittels eines Trägers (11) fix zueinander angeordnet sind,
c) Auflegen und Befestigen der fix zueinander angeordneten Glasprismen (14) auf die Subträgerscheibe, derart, daß jeder strahlungaussendende und/oder strahlungempfangende Körper (21) zwischen zwei Glasprismen (14) zu liegen kommt,
d) ggf. Entfernen des Trägers 11 und
e) Zerteilen der Subträgerscheibe und der Glasprismen (14) in einzelne optoelektronische Module, die jeweils einen Subträger (19), zwei Glasprismen (15,20) und einen strahlungaussendenden und/oder strahlungempfangenden Körper (21) aufweisen.

8. Verfahren gemäß Anspruch 7,
**gekennzeichnet durch** die Verfahrensschritte:
a) Herstellen einer Glasscheibe (1) mit einer Vielzahl von Gräben (17) oder Gruben (18),
b) Positionieren und Befestigen einer Vielzahl von strahlungaussendenden und/oder strahlungempfangenden Körpern (29) in den Gräben (17) oder Gruben (18) und
c) Zerteilen der Glasscheibe (1) in einzelne optoelektronische Module, die jeweils einen Glaskörper mit einem Graben (17) oder einer Grube (18) und einen darin befestigten strahlungaussendenden und/oder strahlungempfangenden Körper (29) aufweisen.

## Claims

1. Process for the simultaneous production of a plurality of glass prisms from a glass article (1), with the following process steps:
- production of a glass article (1) which includes borosilicate glass,
- production of an etching mask (4) having at least one etching window (5) on the main surface (6) of the glass article (1), and
- wet chemical anisotropic etching (7) of the glass article (1) through the etching window (5), in particular by means of an etching mixture which includes hydrofluoric acid, nitric acid and/or ammonium fluoride,
- at least one recess (2) being produced the at least one plane side wall (3) that is oblique with respect to a main surface (6) of the glass article (1), and
- the angle formed between the main surface (6) and the plane region (9) of the side wall (3) being adjustable by varying the etching parameters and/or the composition of the etching mixture,
**characterized in that** at least one recess (2) takes the form of a frustopyramidal pit (2, 18), of a frustopyramidal through-hole (13) or of a trench (2, 17) with a substantially trapezoidal cross section, the surfaces of the recess (2) forming side faces of the glass prisms which are to be produced.

2. Process according to Claim 1, **characterized in that** the glass article (1) is fastened via another main surface (10) on the opposite side from the main surface (6), a support (11) which is substantially unaffected by the etching (7), **in that** the glass article (1) is provided, before or after fastening to the support (11), with an etching mask (4) which has a plurality of etching windows (5), and **in that** the glass article (1) is etched into or etched through fully by the wet chemical etching (7) substantially in the region of the etching window (5).

3. Process according to Claim 1, **characterized in that** an etching mask having a plurality of etching windows (5) is produced on a main surface of the glass article (1), **in that** a plurality of trenches (17) substantially trapezoidal in cross section or substantially frustopyramidal pits (18) are etched into the glass article (1) by the wet chemical etching (7), **in that** the glass article (1) is applied to a support (11) via the side provided with the trenches (17) or pits (18), **in that** the glass article (1) is ground starting from the opposite side from the main surface (7) until there are glass prisms (14) already separated from one another on the support or a glass article (1) having a plurality of substantially frustopyramidal through-holes (13).

4. Process according to one of Claims 1 to 3 for the production of integrated optics or beam deflection means for optical devices, especially for optical telecommunication devices.

5. Process according to one of Claims 1 to 4 for the production of an optoelectronic module, in which a glass prism is provided for deflecting emitted and/or received radiation of a radiation-emitting and/or radiation-receiving article, **characterized in that** a plane side surface of the glass prism is produced by means of anisotropic etching of a glass article.

6. Process according to one of Claims 1 to 5 for the production of an optoelectronic module, in which a radiation-emitting and/or radiation-receiving article (29) is arranged in a trench (17) or in a pit (18) of a glass article (1), **characterized in that** the trench (17) or the pit (18) is produced by means of anisotropic etching of the glass article (1).

7. Process according to Claim 6, **characterized by** the following process steps:
a) fastening a plurality of radiation-emitting and/or radiation-receiving articles (21) to a subcarrier sheet in accordance with a predetermined pattern,
b) producing a plurality of glass prisms (14) which are substantially trapezoidal in cross section and are arranged fixed relative to one another by means of glass bridges or by means of a support (11),
c) applying and fastening the glass prisms (14), which are fixed relative to one another, onto the subcarrier sheet in such a way that each radiation-emitcing and/or radiation-receiving article (21) lies between two glass prisms (14),
d) optionally removing the support (11), and
e) dividing the subcarrier sheet and the glass prisms (14) into individual optoelectronic modules which each have a subcarrier (19), two glass prisms (15, 20) and a radiation-emitting and/or radiation-receiving article (21).

8. Process according to Claim 7, **characterized by** the following process steps:
a) producing a glass sheet (1) having a plurality of trenches (17) or pits (18),
b) positioning and fastening a plurality of radiation-emitting and/or radiation-receiving articles (29) in the trenches (17) or pits (18), and
c) dividing the glass sheet (1) into individual optoelectronic modules, which each have a glass article with a trench (17) or a pit (18) and a radiation-emitting and/or radiation-receiving article (29) fastened therein.

## Revendications

1. Procédé de fabrication simultanée d'une pluralité de prismes en verre à partir d'un corps (1) en verre comprenant les stades de procédé qui consistent :
- à fabriquer un corps (1) en verre ayant du verre au borosilicate,
- à fabriquer un masque (4) d'attaque ayant au moins une fenêtre (5) d'attaque sur la surface (6) principale du corps (1) en verre et
- à effectuer une attaque (7) anisotrope en voie chimique humide du corps (1) en verre à travers la fenêtre (5) d'attaque, notamment au moyen d'un mélange d'attaque qui comporte de l'acide fluorhydrique, de l'acide nitrique et/ou du fluorure d'ammonium, dans lequel
- on produit au moins un évidement (2) qui a une paroi (3) latérale plane inclinée par rapport à une surface (6) principale du corps (1) en verre et
- on règle, en faisant varier les paramètres d'attaque et/ou la composition du mélange d'attaque, l'angle entre la surface (6) principale et la partie (9) plane de la paroi (3) latérale,
**caractérisé**
**en ce que** le au moins un évidement (2) a la forme d'un creux (2, 18) de type en tronc de pyramide, d'un trou (13) traversant de type en tronc de pyramide ou d'un sillon (2, 17) de section transversale sensiblement trapézoïdale, les surfaces de l'évidement (2) formant des surfaces latérales des prismes en verre à fabriquer.

2. Procédé suivant la revendication 1,
**caractérisé**
**en ce que** le corps (1) en verre est fixé par une autre surface (10) principale, opposée à la surface (6) principale, à un support (11) qui n'est sensiblement pas attaqué par l'attaque (7), en ce que l'on unit le corps (1) en verre avant ou après la fixation au support (11) d'un masque (4) d'attaque qui a une pluralité de fenêtres (5) d'attaque, et en ce que l'on attaque en partie ou en le traversant complètement le corps (1) en verre par l'attaque (7) en voie chimique humide essentiellement dans la partie de la fenêtre (5) d'attaque.

3. Procédé suivant la revendication 1,
**caractérisé**
**en ce que** l'on produit sur une surface principale du corps (1) en verre un masque d'attaque ayant une pluralité de fenêtres (5) d'attaque, en ce que l'on ménage dans le corps (1) en verre par l'attaque (7) en voie chimique humide une pluralité de sillons (17) de section transversale sensiblement trapézoïdale ou de creux (18) sensiblement en forme de tronc de pyramide, en ce que l'on applique le corps (1) en verre par le côté muni des sillons (17) ou des creux (18) sur un support (11), en ce que l'on meule le corps (1) en verre à partir du côté opposé à la surface (6) principale jusqu'à ce qu'il y ait sur le support des prismes (14) en verre déjà séparés les uns des autres ou un corps (1) en verre ayant une pluralité de trous (13) traversants sensiblement en forme de tronc de pyramide.

4. Procédé suivant l'une des revendications 1 à 3 de fabrication d'optiques intégrées ou de moyens de déviation de faisceaux pour des dispositifs optiques, notamment pour des dispositifs de la transmission d'informations par voie optique.

5. Procédé suivant l'une des revendications 1 à 4 de fabrication d'un module optoélectronique, dans lequel on prévoit un prisme en verre pour la déviation d'un rayonnement émis et/ou reçu d'un corps émettant et/ou recevant un rayonnement,
**caractérisé**
**en ce que** l'on produit une surface latérale plane du prisme en verre au moyen d'une attaque anisotrope d'un corps en verre.

6. Procédé suivant l'une des revendications 1 à 5 de fabrication d'un module optoélectronique, dans lequel on met un corps (29) émettant et/ou recevant du rayonnement dans un sillon (17) ou dans un creux (18) d'un corps (1) en verre,
**caractérisé**
**en ce qu'**on produit le sillon (17) ou le creux (18) au moyen d'une attaque anisotrope du corps (1) en verre.

7. Procédé suivant la revendication 6,
**caractérisé par** les stades de procédé qui consistent :
a) à fixer une pluralité de corps (21) émettant et/ou recevant du rayonnement sur une tranche servant de sous-substrat suivant un modèle donné à l'avance,
b) on produit une pluralité de prismes (14) en verre de section transversale sensiblement trapézoïdale qui sont disposés de manière fixe les uns par rapport aux autres au moyen de barrettes de verre ou au moyen d'un support (11),
c) on pose et on fixe les prismes (14) en verre qui sont disposés de manière fixe les uns par rapport aux autres sur la tranche servant de sous-substrat, de façon à ce que chaque corps (21) émettant et/ou recevant du rayonnement vienne entre deux prismes (14) en verre,
d) le cas échéant, on élimine le support (11) et
e) on subdivise la tranche servant de sous-support et les prismes (14) en verre en des modules optoélectroniques individuels qui ont respectivement un sous-support (19), deux prismes (15, 20) en verre et un corps (21) émettant et/ou recevant du rayonnement.

8. Procédé suivant la revendication 7,
**caractérisé par** les stades de procédé qui consistent :
a) à produire une vitre (1) ayant une pluralité de sillons (17) ou de creux (18),
b) à mettre en position et à fixer une pluralité de corps (29) émettant et/ou recevant du rayonnement dans les sillons (17) ou dans les creux (18) et
c) à subdiviser la vitre (1) en des modules optoélectroniques individuels qui ont respectivement un corps en verre ayant un sillon (17) ou un creux (18) et un corps (29) émettant et/ou recevant du rayonnement qui y est fixé.
